**Europäisches Patentamt**

**European Patent Office**

**Office européen des brevets**

(19)

(11) Veröffentlichungsnummer: **0 005 187**
**B1**

(12) # EUROPÄISCHE PATENTSCHRIFT

(45) Veröffentlichungstag der Patentschrift:
01.04.81

(51) Int. Cl.³: **G 02 F 1/133**

(21) Anmeldenummer: **79101090.3**

(22) Anmeldetag: **09.04.79**

(54) **Verfahren zur Herstellung der Orientierungsschicht einer Flüssigkristallanzeige und nach diesem Verfahren hergestellte Flüssigkristallanzeige.**

(30) Priorität: **09.05.78  DE 2820245**

(43) Veröffentlichungstag der Anmeldung:
**14.11.79 Patentblatt 79/23**

(45) Bekanntmachung des Hinweises auf die Patenterteilung:
**01.04.81 Patentblatt 81/13**

(84) Benannte Vertragsstaaten:
**CH FR GB IT NL SE**

(56) Entgegenhaltungen:
**FR-A-2 189 767**

(73) Patentinhaber: **SIEMENS AKTIENGESELLSCHAFT Berlin und München, Postfach 22 02 61, D-8000 München 22 (DE)**

(72) Erfinder: **Heynisch, Hinrich, Dr.rer.nat. Dipl.-Phys., Im Birket 7, D-8032 Gräfelfing (DE)**
Erfinder: **Krüger, Hans, Dipl.-Phys., Peralohstrasse 13, D-8000 München 83 (DE)**

ACTORUM AG.

Verfahren zur Herstellung der Orientierungsschicht einer Flüssigkristallanzeige und nach diesem Verfahren hergestellte Flüssigkristallanzeige

Die Erfindung betrifft ein Verfahren gemäss dem Oberbegriff des Anspruchs 1. Eine solche Orientierungstechnik, bei der das Rillensystem durch Belichtung einer lichtempfindlichen Schicht mit interferierenden kohärenten Lichtquellen erzeugt wird, ist in der DE-OS 22 56 317 beschrieben.

Unter der Vielzahl der bisher bekannt gewordenen und getesteten Ausrichtverfahren hat sich vor allem die sog. Schrägbedampfungsmethode (Appl. Phys. Lett. 21 (1972) 173) durchsetzen können. Schrägbedampfte Schichten zeichnen sich dadurch aus, dass sie gleichmässig gut und zuverlässig orientieren und ausserdem die Flüssigkristallsubstanz nicht angreifen. Allerdings verlangt die Schrägbedampfung noch immer einen nicht unerheblichen Fertigungsaufwand, und zwar vor allem dann, wenn die Flüssigkristallmoleküle einen kleinen Anstellwinkel von max. etwa 5° gegen die Substratebene einnehmen sollen. Diese leichte Verkippung, die in vielen Anwendungsbereichen angestrebt wird, stellt sich nur dann ein, wenn man die Aufdampftechnik verfeinert, beispielsweise zwei unterschiedlich dicke Schichten unter verschiedenen Winkeln aufbringt (Appl. Phys. Lett. 29 (1976) 691). Hinzu kommt ein weiterer Nachteil: Auf dem Substrat befindliche Erhebungen wie etwa Elektrodensegmente oder auch Abstandshalter werfen bei der Bedampfung aus schrägen Richtungen Schatten, in denen die Flüssigkristallschicht nicht oder nur mangelhaft ausgerichtet ist.

Abschattungsefekte lassen sich vermeiden, wenn man die Orientierungschicht durch eine Reibetechnik profiliert. Eine solche mechanische Behandlung hat den weiteren Vorzug, dass die Flüssigkristallmoleküle von selbst etwas gegen die Substratfläche geneigt sind; geriebene Schichten liefern aber, selbst wenn man sie maschinell bearbeitet, nach wie vor nur bedingt akzeptable Flüssigkristalltexturen.

Eine einwandfreie Orientierung ergeben Filme, die mit dem eingangs erwähnten Interferenzmusterverfahren strukturiert werden. Diese spezielle Fototechnik erfordert jedoch mehrere Arbeitsgänge und ist daher gerade für Serienfertigungen weniger geeignet.

Der Erfindung liegt die Aufgabe zugrunde, ein Verfahren anzugeben, mit dem man auf rationelle Weise eine Schicht mit einem Linien- bzw. Rillenmuster versehen kann, das benachbarte Flüssigkristallmoleküle mit einem einheitlichen Anstellwinkel, insbesondere einheitlich plattenparallel, ausrichtet. Zu diesem Zweck wird erfindungsgemäss die im Patentanspruch 1 angegebene Orientierungsmethode vorgeschlagen.

Bei dem erfindungsgemässen Verfahren kann das Wellenfeld in der Ebene des Substrates oder in einer oberhalb der Substratebene sich erstreckenden Ebene erzeugt werden. Im erstgenannten Fall entsteht das Schichtenprofil dadurch, dass sich das Schichtenmaterial in den von Druckdifferenzen freien Knotenlinien anlagert und aus den dazwischen liegenden streifenförmigen Bereichen zu den Knotenlinien hin gedrückt wird. Befindet sich die Ebene des Wellenfeldes oberhalb der Trägerplatte und schickt man einen Materialstrahl durch dieses Wellenfeld, so scheidet sich auf dem Substrat eine Schicht mit einem charakteristischen Gefüge ab: Ein die Knotenlinien des Wellenfeldes abbildendes Rippenmuster ist überlagert von Strukturen, die durch ausgelenkte, schräg auftreffende Materialpartikel geprägt worden sind.

Besondere Vorzüge bietet eine Verfahrensvariante, bei der Abstand («Strukturkonstante») zwischen benachbarten Rillen etwa in der Grössenordnung der Wellenlänge des Beleuchtungslichtes liegt und ausserdem die zwischen den Rillen verlaufenden Wälle jeweils einen Streifen aus einem leitfähigen oder dichroitischen Material enthalten. Die leitfähigen Streifen können aus elektrisch leitendem bzw. halbleitendem Material bestehen; bei Verwendung eines Farbstoffes sollten dessen Moleküle eine Vorzugsrichtung einnehmen. Mit dem zusätzlichen Streifenmuster kann die strukturierte Schicht nicht nur die Flüssigkristallsubstanz orientieren sondern auch noch das hindurchtretende Beleuchtungslicht linear polarisieren, da sie wie ein an sich bekannter Gitterpolarisator wirkt. Die polarisierenden Streifen lassen sich auf verschiedene Weise ohne besonderen Mehraufwand realisieren. Entweder man wählt für die Schicht ein geeignetes Material oder aber man bringt auf die fertiggestellte Orientierungsschicht in einem weiteren Schritt das gewünschte Gittermuster auf, beispielsweise durch schräges Aufdampfen eines elektrisch leitenden Materials. Dabei ist vor allem darauf zu achten, dass die Streifen das Licht möglichst vollständig absorbieren und dass die lichte Entfernung zwischen nebeneinanderliegenden Streifen höchstens eine und sicherheitshalber höchstens eine halbe Wellenlänge des höchstfrequenten Beleuchtungslichtanteils beträgt. Weitere Einzelheiten über den Aufbau und die Wirkungsweise eines Gitterpolarisators sind der US-PS 3 046 839 zu entnehmen.

Die erwähnte Doppelfunktion kann von einer im Rahmen der Erfindung hergestellten Schicht ohne weiteres übernommen werden, da der Gitterabstand des Polarisators höchstens einige 10tel μm betragen wird und die Rillen dann ausreichend orientieren, wenn sie enger als 10 μm beieinanderliegen.

Es hat in der letzten Zeit nicht an Versuchen gefehlt, einen zugleich orientierenden und polarisierenden Film zu entwickeln, denn die bisher stets aussen aufgeklebten Polarisatorfolien altern sehr rasch und gehören zu den Displayteilen mit der kürzesten Lebensdauer. So wird in der DE-OS 24 57 641 diskutiert, einen Überzug mit einem langkettigen Polymer und einem dichroitischen Stoff zu versetzen und diesem Film durch eine Scherung eine Vorzugsrichtung zu geben. Ein solcher Lösungsansatz macht aber von einer Schicht mit Mikrostruktur, von der die vorliegende Erfindung ausgeht, keinen Gebrauch.

Der Gitterpolarisator lässt sich umso bequemer herstellen, je grösser der Streifenabstand sein kann, d.h., je langwelliger die Beleuchtung ist. Daher ist in Weiterbildung der Erfindung vorgesehen, eine mit einer orientierenden und polarisierenden Schicht versehene Flüssigkristallanzeige mit einem sog. Fluoreszenzkörper zu kombinieren (vergl. hierzu DE-OS 25 54 226 oder Elektronik 6 (1977) 55). Denn ein solcher Körper gibt das seine fluoreszierenden Partikel anregende Licht in einem relativ engen, nach längeren Wellenlängen hin verschobenen Frequenzband wieder ab.

Die Erfindung soll nun in Verbindung mit der beigefügten Zeichnung näher erläutert werden. In den Figuren der Zeichnung sind einander entsprechende Teile mit gleichen Bezugszeichen versehen. Es zeigen:

Fig. 1 in einem Seitenschnitt eine nach einem erfindungsgemässen Verfahren hergestellte Flüssigkristallanzeige, kombiniert mit einem Fluoreszenzkörper.

Fig. 2 eine Vorrichtung zur Durchführung einer ersten Variante des erfindungsgemässen Verfahrens und

Fig. 3 eine Vorrichtung zur Durchführung einer weiteren Variante des erfindungsgemässen Verfahrens.

Die Figuren sind teilweise sehr schematisch gehalten. Alle für ein Verständnis der Erfindung nicht unbedingt erforderlichen Einzelteile eines Displays bzw. einer Fertigungsanordnung, beispielsweise die elektrischen Zuleitungen einer Flüssigkristallzelle oder Halterungs- und Antriebselemente einer Verdampferanlage sind der Einfachheit halber weggelassen.

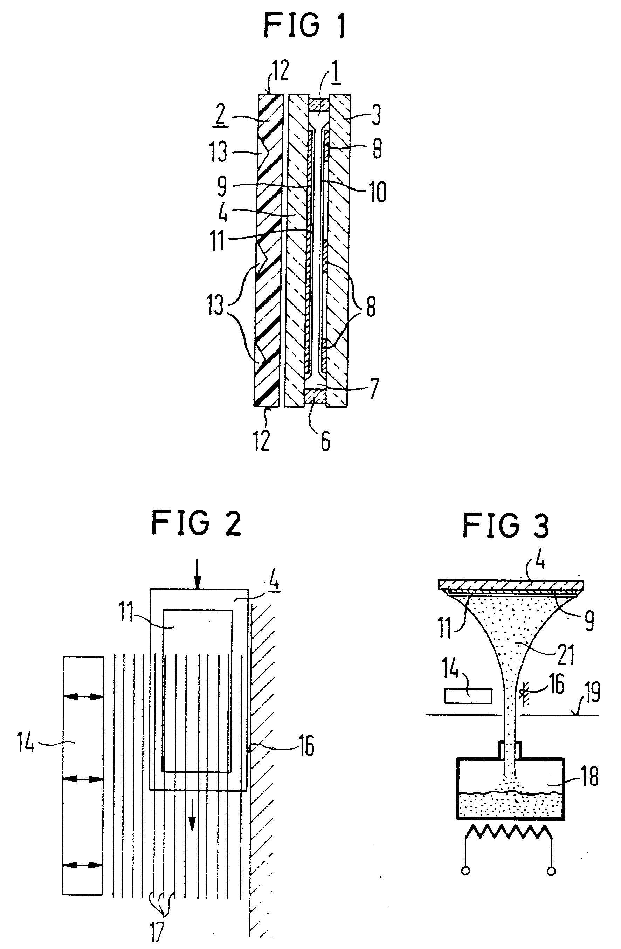

Das Display der Fig. 1 enthält eine Sieben-Segment-Flüssigkristallzelle 1 sowie eine in Betrachtungsrichtung dahinter befindliche Fluoreszenzplatte 2. Die Zelle enthält im einzelnen eine vordere Trägerplatte 3 und eine hintere Trägerplatte 4. Beide Trägerplatten sind über einen Rahmen 6 dicht miteinander verbunden. Der vom Rahmen und den beiden Substraten begrenzte innere Raum ist mit einer Flüssigkristallschicht 7 gefüllt. Die beiden Platten 3, 4 sind ausserdem auf ihren einander zugewandten Innenflächen jeweils mit leitfähigen Belägen (Elektrodensegmente 8, durchgehende Rückelektrode 9) sowie mit einer orientierenden und polarisierenden Schicht 10, 11, im folgenden einfach Orientierungsschicht genannt, versehen. Die Fluoreszenzplatte 2 ist an ihren Seitenflächen verspiegelt (Reflexionsschicht 12) und enthält Lichtaustrittsfenster in Form von Einkerbungen 13 in der Plattenrückseite. Die Einkerbungen sind jeweils einem der Elektrodensegmente 8 zugeordnet. Die Flüssigkristallanzeige arbeitet im vorliegenden Fall nach dem Prinzip einer Drehzelle mit zueinander gekreuzten Polarisatoren, die in der DE-AS 21 58 563 ausführlich dargestellt ist. Wie die Fluoreszenzplatte beschaffen sein sollte und mit dem Lichtventil zusammenwirkt, geht beispielsweise aus den Literaturstellen DE-OS 25 54 226 bzw. Elektronik 6 (1977) 55 hervor. Die Anzeige ist so ausgelegt, das jeweils nur diejenigen Elektrodensegmente angesteuert werden, die gerade zum Bildhintergrund gehören («komplementäre» bzw. «inverse» Ansteuerung). Es erscheint eine in der Fluoreszenzfarbe der Platte 2 leuchtende Ziffer auf dunklem Grund.

Die Orientierungsschichten lassen sich folgendermassen aufbringen:

Zunächst erzeugt man zwischen einem Ultraschallgeber 14 und einem dem Geber gegenüberliegenden Reflektor 16 ein stehendes, ebenes Ultraschall-Wellenfeld mit Knotenlinien 17. Durch dieses Wellenfeld wird nun die zu beschichtende Glasplatte geführt, und zwar in Richtung der Knotenlinien. Während die Glasplatte durch das Wellenfeld läuft, wird sie beschichtet, und zwar im vorliegenden Fall mit einem CVD-(Chemical-Vapor-Deposition-)Verfahren. Das Wellenfeld sorgt dafür, dass sich in der aufwachsenden Schicht eine Struktur ausbildet, die dem Wellenfeld folgendermassen entspricht: Im Bereich der Wellenbäuche entstehen Rillen, während längs der Knotenlinien durch Materialanhäufung wallartige Erhebungen aufgeschichtet werden. Ein solches Gefüge orientiert einheitlich homogen in Richtung des Rillen- bzw. Wallverlaufes. Wollte man eine leicht verkippte Textur, so könnte man an geeigneten Stellen, beispielsweise in den Rillen, zusätzliche Erhebungen schaffen, die in der Flüssigkristallschicht den gewünschten Anstellwinkel induzieren. Regelmässige Rillenunterbrechungen lassen sich durch ein entsprechend abgewandeltes Interferenzmuster erzeugen. Einige Techniken zur Erzeugung einer verkippt homöotropen Textur sind in IEEE Trans. Electron Devices, ED-24 (197) 807 angegeben.

Sollen benachbarte Knotenlinien einen Abstand von ca. 0,5 μm haben, so benötigt man eine Ultraschall-Wellenlänge von ca. 1 μm und damit eine Ultraschall-Frequenz von ca. 300 MHz, da die Schallgeschwindigkeit in dem beim VCD-Verfahren herrschenden Gas etwa bei 300 m/s liegt.

Die Orientierungsschicht besteht im wesentlichen aus Siliciumoxid, dem Metall wie beispielsweise Silber oder Gold zugesetzt ist. Der leitende Zusatz bewirkt, dass die Schicht zugleich auch ein Muster aus zueinander parallelen, elektrisch leitenden Streifen darstellt und somit Licht einer bestimmten Wellenlänge linear polarisiert (das Gitter lässt nur denjenigen Lichtanteil passieren, der senkrecht zur Streifenerstreckung schwingt). Ist die Gitterkonstante auf die Kantenfrequenz des Emissionsbandes der fluoreszierenden Partikel abgestimmt, wird einmal das (höherfrequente) Anregungslicht für die Fluoreszenzplatte ungeschwächt hindurchgelassen und zum anderen das Emissionslicht mit einem hohen Polarisationsgrad linear polarisiert.

In Fig. 3 ist eine Anordnung dargestellt, mit der man das Schichtmaterial einem Wellenfeld aussetzt, bevor es auf die Trägerplatte gelangt. Aus einem Verdampfer 18 wird das betreffende Material verdampft und dann mit einer Blende 19 zu einem Strahl 21 gebündelt. Diesen Strahl schickt man durch ein ebenes stehendes Wellenfeld, das ebenfalls durch einen Ultraschallgeber und einem gegenüberliegenden Reflektor aufgebaut werden könnte. Beim Durchtritt durch dieses Wellenfeld werden die meisten Materialpartikel zur Seite ausgelenkt, der Strahl wird aufgespreizt. Auf der Trägerplatte scheidet sich eine Schicht ab, in der ein streifenförmiges Grundmuster von Strukturen aus schräg zur Bedampfungsrichtung auftreffenden Partikeln modifiziert wird.

Die Erfindung ist nicht auf die dargestellten Ausführungsbeispiele beschränkt. So könnte man das Wellenfeld statt durch Reflexionen durch Interferenzen mehrerer Ultraschall-Quellen erzeugen. Bei beiden Alternativen muss man lediglich dafür sorgen, dass das Schichtmaterial im Wellenfeld ausreichend dicht ist, so dass sich Ultraschall-Wellen mit hinreichend grossen Amplituden ausbilden können. Dient die erfindungsgemäss hergestellte Schicht auch zum Polarisieren, so ist man keineswegs auf schmalbandige Beleuchtungen angewiesen, da ein Gitterpolarisator ein relativ breites Frequenzband mit einer recht ausgeprägten oberen Bandkante polarisiert. Wegen dieser Charakteristik liessen sich mit geeignet strukturierten Schichten unter Umständen auch Farbkontraste erzeugen. Davon abgesehen ist das vorgeschlagene Verfahren auch schon dann sinnvoll, wenn die Schicht nur orientieren soll und Poalrisatoren entweder nicht benötigt werden oder durch spezielle Teile realisiert sind.

## Patentansprüche

1. Verfahren zur Herstellung einer Flüssigkristallanzeige mit zwei Trägerplatten, die eine Flüssigkristallschicht zwischen sich einschliessen und von denen zumindest eine Trägerplatte mit einer die Flüssigkristallschicht orientierenden Schicht (Orientierungsschicht) versehen ist, wobei in der Oberfläche der Orientierungsschicht zueinander parallele Rillen durch ein ebenes stehendes Wellenfeld eingebracht werden, dadurch gekennzeichnet, das das Wellenfeld aus Ultraschallwellen aufgebaut wird.

2. Verfahren nach Anspruch 1, dadurch gekennzeichnet, dass das Wellenfeld mittels eines Resonators erzeugt wird.

3. Verfahren nach Anspruch 1 oder 2, dadurch gekennzeichnet, dass die Orientierungsschicht in einem Tauchverfahren, im Vakuum oder in einem CVD-(Chemical-Vapor-Deposition-)Verfahren aufgetragen wird.

4. Verfahren nach einem der Ansprüche 1 bis 3, dadurch gekennzeichnet, dass das Wellenfeld mit einem Ultraschallgeber und einem dem Ultraschallgeber gegenüberliegenden Reflektor erzeugt wird und dass die zu beschichtende Trägerplatte während ihrer Beschichtung, die insbesondere in einem CVD-Verfahren erfolgt, durch das Wellenfeld geführt wird.

5. Verfahren nach einem der Ansprüche 1 bis 3, dadurch gekennzeichnet, dass das Wellenfeld mit einem Ultraschallgeber und einem dem Ultraschallgeber gegenüberliegenden Reflektor erzeugt wird und dass die zu beschichtende Trägerplatte unmittelbar nach ihrer Beschichtung, die in einem Tauchverfahren erfolgt, durch das Wellenfeld geführt wird.

6. Verfahren nach einem der Ansprüche 1 bis 3, dadurch gekennzeichnet, dass das für die Orientierungsschicht vorgesehene Material verdampft wird, dass der Materialdampf zu einem Strahl gebündelt wird und dass der Dampfstrahl durch das Wellenfeld geführt und dann auf der Trägerplatte niedergeschlagen wird.

7. Verfahren nach einem der Ansprüche 1 bis 6, dadurch gekennzeichnet, dass der Abstand (Strukturkonstante) zwischen benachbarten Rillen etwa die halbe Wellenlänge des Beleuchtungslichtes beträgt und dass die zwischen den Rillen verlaufenden Wälle jeweils einen Streifen aus einem leitfähigen oder dichroitischen Material haben.

8. Verfahren nach Anspruch 7, dadurch gekennzeichnet, dass die Streifen in einem zusätzlichen Schritt auf die Orientierungsschicht aufgebracht werden.

9. Verfahren nach Anspruch 7, dadurch gekennzeichnet, dass die Orientierungsschicht leitfähiges oder dichroitisches Material enthält und die Streifen zugleich mit dem Einbringen der Rillen erzeugt werden.

10. Nach einem Verfahren gemäss Anspruch 9 hergestellte Flüssigkristallanzeige, dadurch gekennzeichnet, dass die Orientierungsschicht Silber oder Gold als leitfähiges Material enthält.

11. Nach einem Verfahren gemäss einem der Ansprüche 7 bis 10 hergestellte Flüssigkristallanzeige, dadurch gekennzeichnet, dass sie mit einem als passiver Helligkeitsverstärker wirkenden Körper («Fluoreszenzkörper») kombiniert ist, der aus einem Material mit einem Brechungsindex $>1$ besteht, fluoreszierende Partikel enthält und mit Lichtaustrittsfenstern versehen ist.

## Patent claims

1. Process for the production of a liquid crystal display with two carrier plates which enclose a liquid crystal layer between them and at least one of which carrier plates is provided with a layer which orientates the liquid crystal layer (orientation layer), wherein parallel grooves are introduced into the surface of the orientation layer by means of a plane standing wave field, characterised in that the wave field is composed of ultrasonic waves.

2. Process as claimed in Claim 1, characterised in that the wave field is produced by means of a resonator.

3. Process as claimed in Claim 1 or 2, characterised in that the orientation layer is applied by a dipping process, in vacuum or by a CVD (Chemical-Vapor-Deposition) process.

4. Process as claimed in one of the Claims 1 to 3, characterised in that the wave field is produced by means of an ultrasonic generator and a reflector opposite to the ultrasonic generator, and that the carrier plate to be coated is conducted through the wave field during its coating, which in particular is effected by a CDV-process.

5. Process as claimed in one of the Claims 1 to 3, characterised in that the wave field is produced by means of an ultrasonic generator and a reflector opposite to the ultrasonic generator, and that immediately after its coating, which is effected by a diping process, the carrier plate to be coated is conducted through the wave field.

6. Process as claimed in one of the Claims 1 to 3, characterised in that the material which is provided for the orientation layer is vaporized, that the vapour of the material is concentrated to form a jet, and that the vapour jet is conducted through the wave field and then deposited on the carrier plate.

7. Process claimed in one of the Claims 1 to 6, characterised in that the spacing (structure constant) between adjacent grooves is approximately half the wave length of the illuminating light, and that the walls which run between the grooves each have a strip which consists of a conductive or dichromic material.

8. Process as claimed in Claim 7, characterised in that the strips are applied to the orientation layer in an additional step.

9. Process as claimed in Claim 7, characterised in that the orientation layer contains conductive or dichromic material and that the strips are produced at the same time as the introduction of the grooves.

10. Liquid crystal display produced in accordance with a process as claimed in Claim 9, characterised in that the orientation layer contains silver or gold as conductive material.

11. Liquid crystal display produced in accordance with a process as claimed in one of the Claims 7 to 10, characterised in that it is combined with a body ("fluorescent body") which acts as a passive brightness amplifier and which consists of a material having a refractive index $>1$, which contains fluorescent particles and which is provided with light outlet windows.

## Revendications

1. Procédé pour la fabrication d'un dispositif d'affichage à cristaux liquides du type comportant deux plaques de support enfermant entre elles une couche de cristal liquide et dont au moins l'une d'elles est pourvue d'une couche (couche d'orientation) orientant la couche de cristal liquide, des stries parallèles entre elles étant ménagées dans la surface de la couche d'orientation au moyen d'un champ d'ondes plan et stationnaire, caractérisé par le fait que le champ d'ondes est constitué avec des ondes ultra-sonores.

2. Procédé selon la revendication 1, caractérisé par le fait que le champ d'ondes est réalisé au moyen d'un résonateur.

3. Procédé selon la revendication 1 ou 2, caractérisé par le fait que la couche d'orientation est déposée par un procédé au trempage, sous vide ou suivant un procédé DCV (Dépôt Chimique en Phase Vapeur).

4. Procédé selon l'une des revendications 1 à 3, caractérisé par le fait que le champ d'ondes est produit avec un générateur d'ultra-sons et avec un réflecteur situé en face dudit générateur et que la plaque de support est déplacée à travers le champ d'ondes, pendant la réalisation de son revêtement avec la couche d'orientation qui est effectuée, en particulier, suivant un procécé DCV.

5. Procédé selon l'une des revendications 1 à 3, caractérisé par le fait que le champ d'ondes est produit avec un générateur d'ultra-sons et avec un réflecteur situé en face dudit générateur, et que la plaque de support à pourvoir de son revêtement réalisé dans un procédé par trempage est déplacée immédiatement après avoir reçu son revêtement, à travers le champ d'ondes.

6. Procédé selon l'une des revendications 1 à 3, caractérisé par le fait que le matériau prévu pour la couche d'orientation est évaporé, que la vapeur est concentrée en un jet, que le jet de vapeur est déplacé à travers le champ d'ondes et que le dépôt est ensuite provoqué sur la plaque de support.

7. Procédé selon l'une des revendications 1 à 6, caractérisé par le fait que la distance entre stries voisines (constante de structure) est égale à environ la demie longueur d'onde de la lumière d'irradiation et que les parties rehaussées et situées entre les stries possèdent chacune une bande d'un matériau conducteur ou dichroïque.

8. Procédé selon la revendication 7, caractérisé par le fait que les bandes sont déposées sur la couche d'orientation au cours d'une phase opératoire supplémentaire.

9. Procédé selon la revendication 7, caractérisé par le fait que les couches d'orientation comportent un matériau conducteur ou dichroïque et les bandes sont réalisées en même temps que sont réalisées les stries.

10. Dispositif d'affichage réalisé selon la revendication 9, caractérisé par le fait que la couche d'orientatioin contient de l'argent ou de l'or au titre de matériau conducteur.

11. Dispositif d'affichage réalisé selon un procédé suivant l'une des revendications 7 à 10, caractérisé par le fait qu'il est combiné avec un corps (corps fluorescent) agissant comme amplificateur de luminosité passif, constitué par un matériau dont l'indice de réfraction est supérieur à 1, contenant des particules fluorescentes et pourvu de fenêtres de sortie de la lumière.

# FIG 1

# FIG 2

# FIG 3